# EUROPEAN PATENT SPECIFICATION

(11) **EP 3 228 487 B1**
(45) Date of publication and mention of the grant of the patent: **26.09.2018**
(21) Application number: 17164129.3
(22) Date of filing: 31.03.2017
(51) Int. Cl.: B60H 1/00, F25B 41/06

(54) **REFRIGERATION CYCLE**
KÄLTEKREISLAUF
CYCLE DE RÉFRIGÉRATION

(30) Priority: 04.04.2016 JP 2016075030
(43) Date of publication of application: 11.10.2017
(73) Proprietor: Valeo Japan Co., Ltd., 360-0193 Saitama (JP)
(72) Inventor: ARAKI, Daisuke, SAITAMA, 360-0193 (JP); ETO, Yoshihisa, SAITAMA, 360-0193 (JP); NAGANO, Hideki, SAITAMA, 360-0193 (JP); HAYASHI, Naoto, SAITAMA, 360-0193 (JP)
(74) Representative: Metz, Gaëlle

(56) References cited:
- JP-A- H08 216 668
- US-A1- 2008 141 691
- US-A1- 2010 243 200

## Description

### BACKGROUND OF THE INVENTION

### 1. Field of the Invention

The present invention relates to a refrigeration cycle having an internal heat exchanger.

### 2. Description of the Related Art

An expansion apparatus used in a refrigeration cycle of an in-vehicle air conditioner is a component that needs to be replaced due to a failure or the like, so the expansion apparatus is disposed in a place in which the component can be easily removed (see, for example, Patent Literature 1). Patent Literature 1 discloses the structure in which the expansion apparatus can be removed from an engine room side while being disposed in a vehicle cabin by connecting a vehicle cabin exterior pipe passing through a pipe penetrating opening provided in a dash panel to the expansion apparatus. In addition, Patent Literature 1 discloses the structure in which the liquid-tightness of the vehicle cabin with respect to the engine room is achieved by blocking an opening of a case accommodating the expansion apparatus with a rubber grommet (seal component) surrounding, in a liquid-tight manner, the periphery of a vehicle cabin interior pipe passing through the opening. This structure prevents the heat generated by an engine and the water intruding the engine room from entering the vehicle cabin.

As means for improving the cooling capability of a refrigeration cycle, there is a known structure in which an internal heat exchanger is disposed in the refrigeration cycle (see, for example, Patent Literature 2). The internal heat exchanger exchanges heat between a cooling medium (at a relatively high temperature) flowing from a condenser to the expansion apparatus and the cooling medium (at a relatively low temperature) flowing from an evaporator to a compressor. In Patent Literature 2, the internal heat exchanger is provided in a case of an air conditioning unit and disposed in a vehicle cabin (inner side of a dash panel) . By configuring the internal heat exchanger integrally with the air conditioning unit as described above, it is possible to reduce the number of man-hours for disposing the internal heat exchanger in the vehicle.

Patent Literature 1 : JP-A-2007-118654
Patent Literature 2 : JP-A-2007-055553

As described in Patent Literature 1, an accommodation space partitioned by the grommet has a shape substantially corresponding to the expansion apparatus. Accordingly, the periphery of the expansion apparatus is substantially blocked by the grommet, so it is expected that the volume of sound entering the vehicle cabin from the engine room through the grommet is reduced and the grommet is prevented from being dropped into the vehicle cabin due to an unintended hydraulic pressure applied to the grommet during water cleaning of the engine room.

In the structure in Patent Literature 2, the internal heat exchanger is disposed instead of the expansion apparatus in the vicinity of the dash panel. This is because the expansion apparatus needs to expand the supercooled cooling medium having passed through the internal heat exchanger. That is, the expansion apparatus cannot be disposed closer to the condenser (that is, the dash panel) than the internal heat exchanger. Accordingly, the expansion apparatus cannot be disposed in the accommodation space partitioned by the grommet and the sound intruded from the engine room cannot be reduced or the possibility of dropping of the grommet during water cleaning of the engine room cannot be reduced.

In addition, although an internal heat exchanger is effective as means for improving the cooling capability of a refrigeration cycle as described above, the cost and the weight of the refrigeration cycle increase by a certain amount when adopting an internal heat exchanger. Accordingly, when a vehicle is actually developed, whether an internal heat exchanger is adopted is not determined simply by the cooling capability. That is, presence or absence of an internal heat exchanger is determined comprehensively depending on various factors, such as the cooling capability and the design concept, the weight, or the cost of a vehicle. Accordingly, regardless of presence or absence of an internal heat exchanger, without changing a through hole and a seal component such as a grommet for blocking the through hole provided in a dash panel, it is desirable to reduce sound generating in the engine room and prevent occurrence of a failure during water cleaning of the engine room.

Document US 2008/0141691 discloses a refrigeration cycle according to the preamble of claim 1.

### SUMMARY OF THE INVENTION

The invention relates to a refrigeration cycle for vehicle air conditioning, that includes an internal heat exchanger and has an object of providing a refrigeration cycle capable of maintaining the environment in a vehicle cabin against defect factors such as sound caused by an engine room and the water pressure during water cleaning of the engine room without changing a through hole provided in a dash panel and a seal member such as a grommet for blocking the through hole even in a specification having no internal heat exchanger.

A refrigeration cycle according to the invention includes a cooling medium circuit including a compressor a condenser, an expansion apparatus, and an evaporator connected via a pipe, the cooling medium circuit circulating a cooling medium, the cooling medium circuit being mounted in a vehicle, an internal heat exchanger including a first heat exchanging unit through which the cooling medium introduced from the condenser to the expansion apparatus flows and a second heat exchanging unit through which the cooling medium introduced from the evaporator to a suction side of the compressor flows, the internal heat exchanger performing a heat exchange of the cooling medium between the first heat exchanging unit and the second heat exchanging unit, the internal heat exchanger being disposed in a vehicle cabin, a connector through which a flow passage for the cooling medium between the condenser and the first heat exchanging unit and a flow passage for the cooling medium between the second heat exchanging unit and the compressor, and a seal component for blocking a through hole provided in a dash panel partitioning an engine room from the vehicle cabin, in which the seal component has a peripheral wall part extending in a direction in which the through hole extends, in which all or part of the connector is accommodated in an accommodation space partitioned by the peripheral wall part, and in which all or part of the expansion apparatus has an outer shape accommodatable in the accommodation space.

In the refrigeration cycle according to the invention, preferably, the connector includes a first connection part to which the pipe through which the cooling medium flowing from the condenser flows is connected, a second connection part to which an inlet portion of the first heat exchanging unit is connected, a third connection part to which an outlet portion of the second heat exchanging unit is connected, and a fourth connection part to which the pipe through which the cooling medium sucked by the compressor flows is connected. By making the connector connectable to the internal heat exchanger, the number of components of the refrigeration cycle can be reduced and a contribution to space saving can be achieved.

In the refrigeration cycle according to the invention, preferably, the expansion apparatus is a block type expansion apparatus. Since the outer shape of a block type expansion apparatus has less bumps and dips than in a temperature-sensitive cylindrical expansion apparatus, the gap between the expansion apparatus and the seal component (grommet) can be easily reduced in a specification having no internal heat exchanger.

In the refrigeration cycle according to the invention, preferably, the internal heat exchanger has a laminated structure in which a plurality of the first heat exchanging units and a plurality of the second heat exchanging units are laminated alternately. Since the internal heat exchanger having a laminated structure saves space as compared with an internal heat exchanger having a double pipe structure, the internal heat exchanger can be easily disposed in the vehicle cabin.

In the refrigeration cycle according to the invention, the peripheral wall part of the seal component has a close contact part in close contact with the connector in a liquid-tight manner and the expansion apparatus has an outer shape capable of making close contact with the close contact part in a liquid-tight manner. Regardless of presence or absence of an internal heat exchanger, it is possible to reduce sound entering from the engine room or prevent occurrence of a failure during water cleaning and maintain the environment in the vehicle cabin.

In the refrigeration cycle according to the invention, preferably, the connector has a first connection part to which the pipe through which the cooling medium flowing from the condenser flows is connected and a fourth connection part to which the pipe through which the cooling medium sucked by the compressor flows is connected and the expansion apparatus includes connection parts having the same shapes and the same dispositions as the first connection part and the fourth connection part. The common pipe connection structure can be used for both the specification having an internal heat exchanger and the specification not having an internal heat exchanger.

In the refrigeration cycle according to the invention, preferably, the connector has a second connection part to which an inlet portion of the first heat exchanging unit is connected and a third connection part to which an outlet portion of the second heat exchanging unit is connected and the expansion apparatus includes connection parts having the same shapes and the same dispositions as the second connection part and the third connection part. By making the shape of the connection part of the internal heat exchanger connected to the connector and the shape of the connection member connected to the internal heat exchanger identical, development becomes easier.

In the refrigeration cycle according to the invention, preferably, the connector has a fifth connection part to which the pipe through which the cooling medium flowing into the first heat exchanging unit flows is connected and a sixth connection part to which the pipe through which the cooling medium flowing from the second heat exchanging unit flows is connected and the expansion apparatus includes connection parts having the same shapes and the same dispositions as the fifth connection part and the sixth connection part. The common pipe connection structure can be used for both the specification having an internal heat exchanger and the specification not having an internal heat exchanger.

The invention relates to a refrigeration cycle for vehicle air conditioning, that includes an internal heat exchanger and provides a refrigeration cycle capable of maintaining the environment in a vehicle cabin against defect factors such as sound caused by an engine room and the water pressure during water cleaning of the engine room without changing a through hole provided in a dash panel and a seal member such as a grommet for blocking the through hole even in a specification having no internal heat exchanger.

### BRIEF DESCRIPTION OF THE DRAWINGS

Fig. 1 is a system diagram illustrating an example of a refrigeration cycle according to an embodiment.
Fig. 2 is a perspective view illustrating an example of a block type expansion apparatus.
Fig. 3 is a cross sectional view taken along line X-X in Fig. 2.
Fig. 4 is a perspective view illustrating an example of an internal heat exchanger having a laminated structure.
Fig. 5 is a perspective view illustrating an example of a connector.
Fig. 6 is a cross sectional view taken along line Y-Y in Fig. 5.
Fig. 7 is an exploded perspective view illustrating the structure of connection between the connector, the internal heat exchanger, the expansion apparatus, and an evaporator.
Fig. 8 is an enlarged view illustrating the vicinity of a through hole of a dash panel.
Fig. 9 is an enlarged view illustrating the vicinity of the through hole of the dash panel when the refrigeration cycle does not have the internal heat exchanger.

### DESCRIPTION OF THE PREFERRED EMBODIMENTS

An aspect of the invention will be described below with reference to the attached drawings. The embodiment described below is an example of the invention and the invention is not limited the following embodiment. Components having the same reference numerals in this specification and the drawings are identical to each other. Various modifications may be made without departing from the scope of the invention.

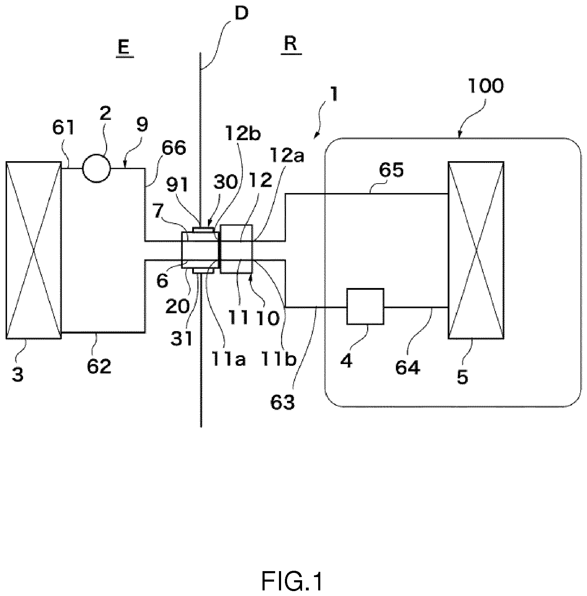

Fig. 1 is a system diagram illustrating an example of a refrigeration cycle according to the embodiment. As illustrated in Fig. 1, a refrigeration cycle 1 according to the embodiment includes a cooling medium circuit 9 including a compressor 2, a condenser 3, an expansion apparatus 4, and an evaporator 5 connected via pipes 61 to 66, the cooling medium circuit 9 circulating a cooling medium, the cooling medium circuit 9 being mounted in a vehicle, an internal heat exchanger 10 including a first heat exchanging unit 11 through which the cooling medium introduced from the condenser 3 to the expansion apparatus 4 flows and a second heat exchanging unit 12 through which the cooling medium introduced from the evaporator 5 to a suction side of the compressor 2 flows, the internal heat exchanger 10 performing a heat exchange of the cooling medium between the first heat exchanging unit 11 and the second heat exchanging unit 12, the internal heat exchanger 10 being disposed in a vehicle cabin, a connector 20 through which a flow passage 6 for the cooling medium between the condenser 3 and the first heat exchanging unit 11 and a flow passage 7 for the cooling medium between the second heat exchanging unit 12 and the compressor 2 pass, and a seal component 30 for blocking a through hole 91 provided in a dash panel D partitioning an engine room E from a vehicle cabin R, in which the seal component (grommet) 30 has a peripheral wall part 31 extending in a direction in which the through hole 91 extends, in which all or part of the connector 20 is accommodated in an accommodation space partitioned by the peripheral wall part 31, and in which all or part of the expansion apparatus 4 has an outer shape accommodatable in the accommodation space.

Of the components of the refrigeration cycle 1, the compressor 2 and the condenser 3 are disposed in the engine room E, and the expansion apparatus 4, the evaporator 5, and the internal heat exchanger 10 are disposed in the vehicle cabin R. An HVAC unit 100 is disposed in the vehicle cabin R. The HVAC unit 100 includes a blower (not illustrated), the expansion apparatus 4, the evaporator 5, an air mix door (not illustrated), and a heater core (not illustrated), and the like and blows conditioned air into the vehicle cabin R.

The cooling medium circuit 9 is a closed circuit including the compressor 2, the condenser 3, the expansion apparatus 4, and the evaporator 5 connected via the pipes 61 to 66 and the cooling medium circulates therethrough. The cooling medium is, for example, a chlorofluorocarbon substance such as R134a, HFO-1234yf, or carbon dioxide. When the cooling medium circulating inside is a chlorofluorocarbon substance, the cooling medium circuit 9 has a liquid tank (not illustrated) for separating the gas of the cooling medium from the liquid of the cooling medium while storing part of the cooling medium, in the condenser 3 or between the condenser 3 and the internal heat exchanger 10. When the cooling medium circulating inside is carbon dioxide, the cooling medium circuit 9 has an accumulator (not illustrated) for storing part of the cooling medium between the evaporator 5 and the compressor 2.

When receiving a driving force of an engine (not illustrated) or a driving force of a motor (not illustrated) driven by electric power, the compressor 2 compresses a low temperature and low pressure vaporized cooling medium to generate a high temperature and high pressure vaporized cooling medium. The compressor 2 may be of fixed-capacity type or of variable-capacity type.

Generally, the condenser 3 is disposed on the front surface of a radiator in the engine room at the front end (front side) of the vehicle. The condenser 3 is a heat exchanger and cools the high temperature and high pressure vaporized cooling medium discharged from the compressor 2 using outside air in front of the vehicle introduced from a grill opening (not illustrated) provided in front of the vehicle, such as a front grill, and generates a high temperature and high pressure liquid cooling medium. The outside air introduced from the grill opening is generated by either of both of a travel of the vehicle and the operation of a cooling fan (not illustrated).

The expansion apparatus 4 decompresses and expands the cooling medium condensed by the condenser 3 using a throttle action to generate a low temperature and low pressure nebulosus cooling medium (cooling medium in the gas-liquid mixed state) and adjusts the flow rate of the cooling medium.

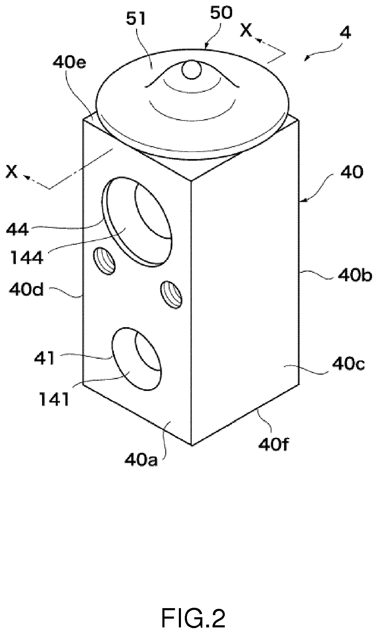

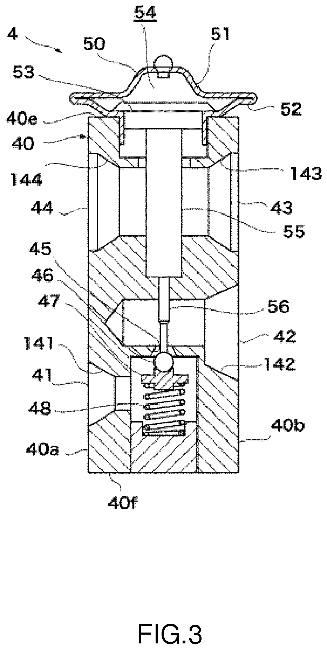

Fig. 2 is a perspective view illustrating an example of a block type expansion apparatus. Fig. 3 is a cross sectional view taken along line X-X in Fig. 2. The expansion apparatus 4 is preferably a block type expansion apparatus as illustrated in Figs. 2 and 3.

The block type expansion apparatus 4 includes a main body 40 and an element part 50. The main body 40 is, for example, rectangular parallelepiped including a first side surface 40a, a second side surface 40b, a third side surface 40c, a fourth side surface 40d, a top surface 40e, and a bottom surface 40f.

The first side surface 40a is provided with a first inflow port 41 to which the cooling medium flowing from the first heat exchanging unit 11 (illustrated in Fig. 1) flows and a second outflow port 44 through which the cooling medium flows to the second heat exchanging unit 12 (illustrated in Fig. 1). The second side surface 40b is provided with a first outflow port 42 through which the cooling medium flows to the evaporator 5 (illustrated in Fig. 1) and a second inflow port 43 to which the cooling medium flowing from the evaporator 5 (illustrated in Fig. 1) flows. The element part 50 is fixed to the top surface 40e. The element part 50 includes an upper housing 51, a lower housing 52, and a diaphragm 53. A temperature sensitive chamber 54 is the space enclosed by the upper housing 51 and the diaphragm 53. A temperature-sensitive medium, which changes the pressure depending on the temperature of the cooling medium flowing from the evaporator 5, is encapsulated in the temperature sensitive chamber 54.

In the passage for the cooling medium from the first inflow port 41 to the first outflow port 42, a valve seat 45 and a spherical valve element 46 in contact with the valve seat 45 are disposed. The valve element 46 is urged via a valve element receiving portion 47 by a coil spring 48 in a direction in which the valve element 46 is seated on the valve seat 45. In the main body 40, a temperature sensitive bar 55 for transmitting the temperature of the passage for the cooling medium from the second inflow port 43 to the second outflow port 44 to the temperature-sensitive medium in the temperature sensitive chamber 54, and an operation bar 56 for transmitting the motion of the temperature sensitive bar 55 to the valve element 46 are provided.

In the expansion apparatus 4, the cooling medium undergoes adiabatic expansion when passing through the gap between the valve seat 45 and the valve element 46 and changes to a low temperature and low pressure nebulosus cooling medium. The gap between the valve seat 45 and the valve element 46 is controlled based on the temperature of the cooling medium flowing from the evaporator 5. That is, when the heat of the cooling medium flowing from the evaporator 5 is transmitted from the temperature sensitive bar 55 to the temperature-sensitive medium in the temperature sensitive chamber 54, the pressure of the temperature-sensitive medium is changed. Then, the diaphragm 53 is displaced depending on the change in the pressure of temperature-sensitive medium, raises the temperature sensitive bar 55 and the operation bar 56, and changes the distance between the valve seat 45 and the valve element 46. The invention is not limited to the structure of the expansion apparatus 4.

The evaporator 5 (illustrated in Fig. 1) is a heat exchanger and evaporates the cooling medium in the gas-liquid mixed state in the expansion apparatus 4 and cools and dehumidifies the blowing air having flowed through the evaporator 5 by the evaporation heat at that time.

As illustrated in Fig. 1, the internal heat exchanger 10 is disposed on the cooling medium circuit 9. The internal heat exchanger 10 includes the first heat exchanging unit 11 through which the cooling medium introduced from the condenser 3 to the expansion apparatus 4 flows and the second heat exchanging unit 12 through which the cooling medium introduced from the evaporator 5 to the suction side of the compressor 2 flows and performs heat exchange between the relatively high temperature cooling medium flowing through the first heat exchanging unit 11 and the relatively low temperature cooling medium flowing through the second heat exchanging unit 12.

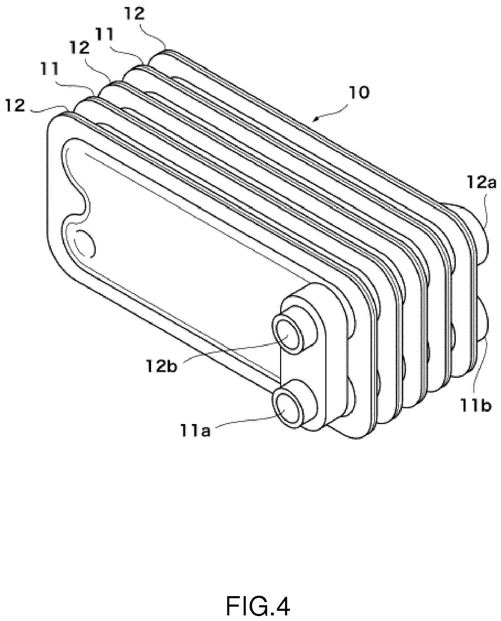

Fig. 4 is a perspective view illustrating an example of an internal heat exchanger having a laminated structure. The internal heat exchanger 10 may have a laminated structure in which a plurality of the first heat exchanging units 11 and a plurality of the second heat exchanging units 12 are laminated alternately as illustrated in Fig. 4 or may have a double pipe structure as illustrated in JP-A-2007-055553. Of these structures, the internal heat exchanger 10 more preferably has a laminated structure. In the internal heat exchanger having a double pipe structure, since a heat exchange part needs to have a sufficient length for appropriate heat exchange, it is difficult to perform space saving by reducing the length. On the other hand, the space for equipment is apt to reduce because the occupant space increases in the vehicle cabin. Therefore, an internal heat exchanger having a double pipe structure may partially or entirely extend off the vehicle cabin R and the internal heat exchanger may need to be disposed in the engine room E. In contrast, since an internal heat exchanger having a laminated structure saves space compared to the internal heat exchanger having the double pipe structure, the entire internal heat exchanger can be easily disposed in the vehicle cabin. The internal heat exchanger 10 is preferably attached to the outside of the HVAC unit 100 (illustrated in Fig. 1). This makes the attachment and detachment of the internal heat exchanger 10 easier.

The internal heat exchanger 10 has the laminated structure illustrated in Fig. 4 in which, for example, a plurality of plates pressed into a predetermined shape are laminated in the thickness direction and this structure is also referred to as a plate type. In addition, the internal heat exchanger 10 having the laminated structure is not limited to the plate type and may be an internal heat exchanger of tube type in which, for example, a plurality of flow passages is provided in one flat tube and a plurality of the flat tubes is laminated in the thickness direction.

As illustrated in Fig. 1, the pipe 61 directly or indirectly connects the outlet portion of the compressor 2 to the inlet portion of the condenser 3. The pipe 62 directly or indirectly connects the outlet portion of the condenser 3 to an inlet portion 11a of the first heat exchanging unit 11. The pipe 63 directly or indirectly connects an outlet portion 11b of the first heat exchanging unit 11 to the inlet portion of the expansion apparatus 4. The pipe 64 directly or indirectly connects the outlet portion of the expansion apparatus 4 to the inlet portion of the evaporator 5. The pipe 65 directly or indirectly connects the outlet portion of the evaporator 5 to an inlet portion 12a of the second heat exchanging unit 12. The pipe 66 directly or indirectly connects an outlet portion 12b of the second heat exchanging unit 12 to the inlet portion of the compressor 2.

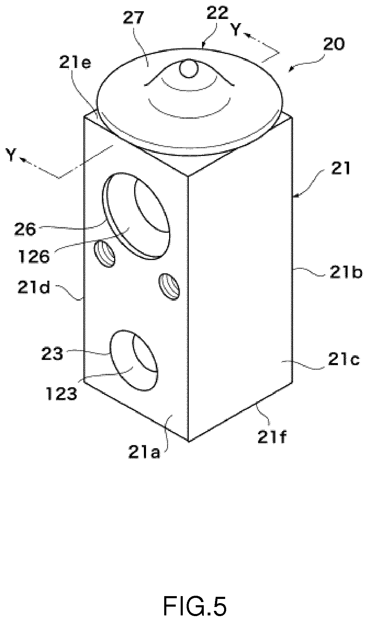

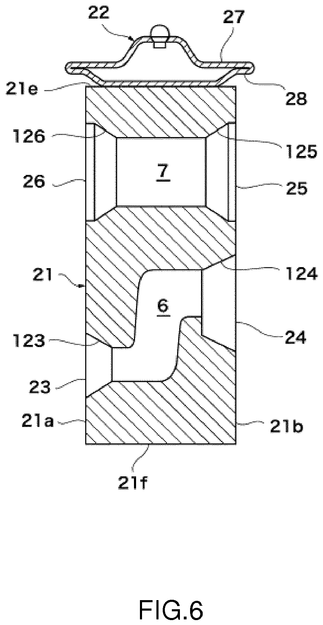

Fig. 5 is a perspective view illustrating an example of the connector. Fig. 6 is a cross sectional view taken along line Y-Y in Fig. 5. The connector 20 includes a main body 21 and a pseudo-element part 22. The main body 21 is, for example, rectangular parallelepiped including a first side surface 21a, a second side surface 21b, a third side surface 21c, a fourth side surface 21d, a top surface 21e, and a bottom surface 21f. The flow passage (may be referred to below as the first flow passage) 6 for the cooling medium between the condenser 3 (illustrated in Fig. 1) and the first heat exchanging unit 11 (illustrated in Fig. 1) and the flow passage (may be referred to below as the second flow passage) 7 for the cooling medium between the second heat exchanging unit 12 (illustrated in Fig. 1) and the compressor 2 (illustrated in Fig. 1) pass between the first side surface 21a and the second side surface 21b. An entry 23 of the first flow passage 6 is provided in the first side surface 21a and an exit 24 of the first flow passage 6 is provided in the second side surface 21b. The entry 23 of the first flow passage 6 is present closer to the bottom surface 21f than the exit 24 of the first flow passage 6. The first flow passage 6 only needs to communicate between the entry 23 and the exit 24 disposed at different height positions and not limited to the flow passage bent at the right angle as illustrated in Fig. 6 and may communicate between the entry 23 and the exit 24, for example, linearly or like an S-shape. An entry 25 of the second flow passage 7 is provided in the second side surface 21b and an exit 26 of the second flow passage 7 is provided in the first side surface 21a.

The pseudo-element part 22 is fixed to the top surface 21e of the main body 21. The pseudo-element part 22 includes an upper housing 27 and a lower housing 28 . Although the inside of the pseudo-element part 22 is hollow in Fig. 6, the inside may be solid.

The connector 20 preferably includes a first connection part 123 to which the pipe 62 (illustrated in Fig. 1) through which the cooling medium flowing from the condenser passes is connected, a second connection part 124 to which the inlet portion 11a (illustrated in Fig. 1) of the first heat exchanging unit is connected, a third connection part 125 to which the outlet portion 12b (illustrated in Fig. 1) of the second heat exchanging unit is connected, and a fourth connection part 126 to which the pipe 66 (illustrated in Fig. 1) through which the cooling medium sucked by the compressor flows is connected. Since the connector 20 is directly connected to the internal heat exchanger 10 without intervening a pipe, the number of components of the refrigeration cycle 1 can be reduced, thereby contributing to space saving. The first connection part 123 is provided at the entry 23 of the first flow passage 6. The second connection part 124 is provided at the exit 24 of the first flow passage 6. The third connection part 125 is provided at the entry 25 of the second flow passage 7. The fourth connection part 126 is provided at the exit 26 of the second flow passage 7.

In addition, the connector 20 is made of a material that can be mounted in a vehicle, such as, for example, aluminum alloy, stainless alloy, iron, heat resistant and water resistant resin, or plated resin.

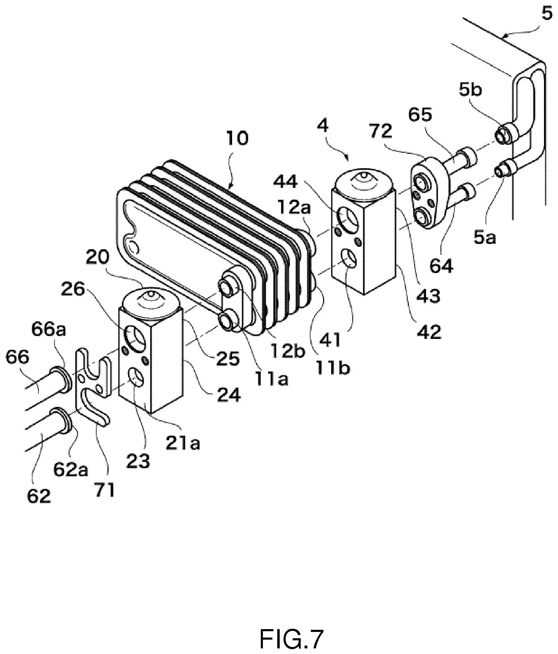

Next, the structure of connection of the connector 20, the internal heat exchanger 10, the expansion apparatus 4, and the evaporator 5 will be described with reference to Fig. 7. The entry 23 of the first flow passage of the connector 20 and the exit 26 of the second flow passage of the connector 20 are connected to the pipes 62 and 66, respectively. The pipes 62 and 66 have flanges 62a and 66a, respectively, and the pipes 62 and 66 are fixed when the flanges 62a and 66a are clamped between a joint member 71 and the first side surface 21a of the connector 20.

The exit 24 of the first flow passage of the connector 20 and the entry 25 of the second flow passage of the connector 20 are connected to the inlet portion 11a of the first heat exchanging unit 11 and the outlet portion 12b of the second heat exchanging unit 12, respectively. Although the exit 24 and the entry 25 of the connector 20 are directly connected to the outlet portion 11a and the inlet portion 12b of the internal heat exchanger 10 in the example illustrated in Fig. 7, the invention is not limited to this example and pipes (not illustrated) may be present between the exit 24 and the entry 25 of the connector 20 and the outlet portion 11a and the inlet portion 12b of the internal heat exchanger 10.

The outlet portion 11b of the first heat exchanging unit 11 and the inlet portion 12a of the second heat exchanging unit 12 are connected to the first inflow port 41 and the second outflow port 44 of the expansion apparatus 4, respectively. Although the outlet portion 11b and the inlet portion 12a of the internal heat exchanger 10 are directly connected to the first inflow port 41 and the second outflow port 44 of the expansion apparatus 4 in the example illustrated in Fig. 7, the invention is not limited to this example and the pipes 63 and 65 may be present between the outlet portion 11b and the inlet portion 12a of the internal heat exchanger 10 and the entry and the exit of the expansion apparatus 4 as illustrated in Fig. 1.

The first outflow port 42 and the second inflow port 43 of the expansion apparatus are connected to the pipes 64 and 65 via a joint member 72. The pipes 64 and 65 are connected to an inlet portion 5a and an outlet portion 5b of the evaporator 5, respectively. Although the pipes 64 and 65 are present between the first flow-out port 42 and the second flow-in port 43 of the expansion apparatus 4 and the inlet portion 5a and the outlet portion 5b of the evaporator 5 in the example illustrated in Fig. 7, the invention is not limited to this example and the first flow-out port 42 and the second flow-in port 43 of the expansion apparatus 4 may be directly connected to the inlet portion 5a and the outlet portion 5b of the evaporator 5.

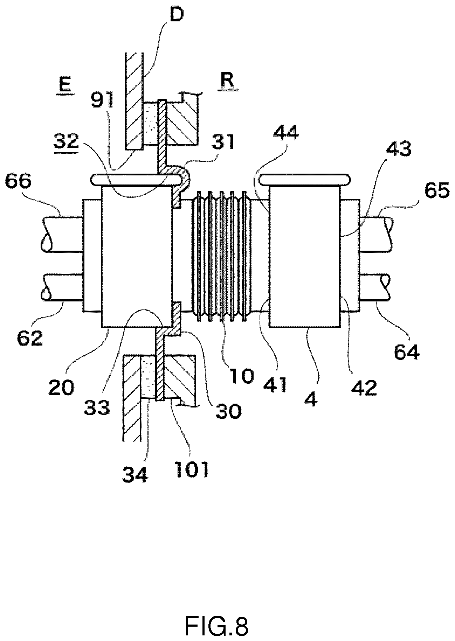

Fig. 8 is an enlarged view illustrating the vicinity of the through hole of the dash panel. As illustrated in Fig. 8, the through hole 91 provided in the dash panel D is preferably covered with the seal component 30 from the inside of the vehicle cabin R. The seal component 30 is pushed against the dash panel D by, for example, an HVAC case 101 and mounted so that an elastic foam material 34 disposed between the dash panel D and the seal component 30 is compressed to achieve liquid tightness with respect to the dash panel D. The seal component 30 does not need to be mounted using the structure illustrated in Fig. 8 and may be directly fitted into the through hole 91. The dash panel D is a wall for partitioning the engine room E from the vehicle cabin R and may be referred to as a firewall or a toe board. The through hole 91 is an opening communicating the engine room E with the vehicle cabin R in order to make connection between a device (for example, the compressor 2 or the condenser 3 illustrated in Fig. 1) disposed in the engine room E and a device (for example, the internal heat exchanger 10) disposed in the vehicle cabin R. The shape of the through hole 91 is not limited particularly, but, for example, a rectangle obtained by connecting corners with curves.

The seal component 30 is preferably made of, for example, a rubber material such as EPDM (ethylene-propylene-diene rubber) . In addition, the seal component 30 has the peripheral wall part 31 extending in the penetrating direction of the through hole 91 as illustrated in Fig. 8. The peripheral wall part 31 is shaped like a frame and an accommodation space 32 is formed in the frame. The accommodation space 32 accommodates all or part of the connector 20. Although the peripheral wall part 31 is disposed closer to the vehicle cabin R than the dash panel D in the example illustrated in Fig. 8, the invention is not limited to this example and the peripheral wall part 31 may pass through the through hole 91 while making contact with the inner periphery of the through hole 91.

In the embodiment, as illustrated in Fig. 8, the environment in the vehicle cabin can be maintained by covering the through hole 91 with the seal component 30, accommodating the connector 20 in the accommodation space 32 of the seal component 30, and blocking the through hole 91 of the dash panel D. Although Fig. 8 illustrates an example in which the peripheral wall part 31 has a close contact part 33 in close contact with the connector 20 in a liquid-tight manner to maintain the environment in the vehicle cabin, the invention is not limited to this example. As long as the inside of the vehicle cabin is liquid-tight with respect to the engine room, when pipes (not illustrated) are present between the entry and exit of the connector 20 and the entry and exit of the internal heat exchanger 10, the peripheral wall part 31 may have a liquid-tight part (not illustrated) in close contact with the pipes in a liquid-tight manner.

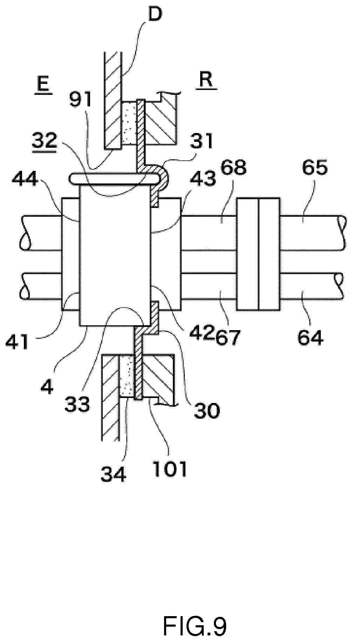

Whether the internal heat exchanger 10 is mounted in the refrigeration cycle 1 is determined comprehensively depending on the various factors, such as the cooling capability and the design concept, the weight, or the cost of a vehicle. Accordingly, the refrigeration cycle 1 is desirably applicable to the specification having the internal heat exchanger 10 and the specification not having the internal heat exchanger 10 without the need to make significant design changes such as changes in the shapes of components. Accordingly, in the embodiment, the expansion apparatus 4 has an outer shape accommodatable in the accommodation space and the expansion apparatus 4 is accommodated in the accommodation space 32 of the seal component 30 instead of the connector 20 as illustrated in Fig. 9 when the internal heat exchanger 10 is not present. This can obtain the liquid-tightness of the inside of the vehicle cabin R with respect to the engine room E regardless of whether the internal heat exchanger 10 is present or not. When the refrigeration cycle 1 has the internal heat exchanger 10, the connector 20, the internal heat exchanger 10, and the expansion apparatus 4 are present between the pipe 62 connected to the condenser and the pipe 66 connected to the compressor and the pipes 64 and 65 connected to the evaporator, as illustrated in Fig. 8. In contrast, when the refrigeration cycle 1 does not have the internal heat exchanger 10, the refrigeration cycle 1 has the same structure as the refrigeration cycle 1 having the internal heat exchanger 10 except that the expansion apparatus 4 and new pipes 67 and 68 are present between the pipes 62 and 66 and the pipes 64 and 65 as illustrated in Fig. 9. As described above, even in the specification in which the refrigeration cycle 1 does not have the internal heat exchanger 10, significant design changes of the refrigeration cycle 1 are not necessary.

Next, the case in which the peripheral wall part 31 has the close contact part 33 in close contact with the connector 20 in a liquid-tight manner will be described about the shapes of the connector 20 and the expansion apparatus 4.

When the peripheral wall part 31 of the seal component 30 has the close contact part 33 in close contact with the connector 20 in a liquid-tight manner, the expansion apparatus 4 preferably has an outer shape capable of making close contact with the close contact part 33 in a liquid-tight manner. The surface shape of one or both of the first side surface 21a and the second side surface 21b of the connector 20 (illustrated in Fig. 5) is preferably the same as the surface shape of one or both of the first side surface 40a and the second side surface 40b of the expansion apparatus (illustrated in Fig. 2). In addition, the outer shapes of the outer peripheral surface of the connector 20 (illustrated in Fig. 5) including the upper housing 27, the third side surface 21c, the bottom surface 21f, and the fourth side surface 21d are preferably the same as the outer shapes of the outer peripheral surface of the expansion apparatus 4 (illustrated in Fig. 2) including the upper housing 51, the third side surface 40c, the bottom surface 40f, and the fourth side surface 40d. Even when the expansion apparatus 4 is accommodated in the accommodation space 32 of the seal component 30 in the specification not having the internal heat exchanger 10, the gap between the seal component 30 and the expansion apparatus 4 can be blocked more surely.

This example shows that the expansion apparatus 4 is a block type expansion apparatus. Since the outer shape of a block type expansion apparatus has less bumps and dips than in a temperature-sensitive cylindrical expansion apparatus, the expansion apparatus 4 can be easily accommodated in the accommodation space 32. In addition, the shape of the connector 20 or the seal component 30 can be made simpler.

As illustrated in Figs. 2 and 5, the expansion apparatus 4 preferably includes connection parts 141 and 144 having the same shapes and the same dispositions as the first connection part 123 and the fourth connection part 126 of the connector 20. The common structure of connection of the pipes 62 and 66 (illustrated in Fig. 7) can be used for both the specification having the internal heat exchanger 10 and the specification not having the internal heat exchanger 10. The connection part 141 of the expansion apparatus 4 corresponding to the first connection part 123 of the connector 20 is provided at the first inflow port 41 of the expansion apparatus 4. In addition, the connection part 144 of the expansion apparatus 4 corresponding to the fourth connection part 126 of the connector 20 is provided at the second outflow port 44 of the expansion apparatus 4.

When a pipe is not present between the connector 20 and the internal heat exchanger 10, the expansion apparatus 4 preferably includes connection parts 142 and 143 having the same shapes and the same dispositions as the second connection part 124 and the third connection part 125 of the connector 20, as illustrated in Figs. 3 and 6. Development becomes easier by making the shape of the connection part of the internal heat exchanger 10 connected to the connector 20 identical to the shape of the connection member 72 (joint member 72) close to the vehicle cabin connected to the expansion apparatus 4. The connection part 142 of the expansion apparatus 4 corresponding to the second connection part 124 of the connector 20 is provided at the first outflow port 42 of the expansion apparatus 4. In addition, the connection part 143 of the expansion apparatus 4 corresponding to the third connection part 125 of the connector 20 is provided at the second inflow port 43 of the expansion apparatus 4.

In addition, when a pipe is present between the connector 20 and the internal heat exchanger 10, the exit 24 of the first flow passage of the connector 20 is provided with the second connection part 124 to which a pipe (not illustrated) through which the cooling medium flowing into the first heat exchanging unit 11 flows is connected and the entry 25 of the second flow passage of the connector 20 is provided with a third connection part 125 to which a pipe (not illustrated) through which the cooling medium flowing from the second heat exchanging unit 12 flows is connected. In this case, the expansion apparatus 4 preferably includes the connection parts 142 and 143 having the same shapes and the same dispositions as the second connection part 124 and the third connection part 125. When a pipe is present between the connector 20 and the internal heat exchanger 10, the design flexibility of the layout of the refrigeration cycle 1 is improved. The connection part 142 of the expansion apparatus 4 corresponding to the second connection part 124 of the connector 20 is provided at the first outflow port 42 of the expansion apparatus 4. In addition, the connection part 143 of the expansion apparatus 4 corresponding to the third connection part 125 of the connector 20 is provided at the second inflow port 43 of the expansion apparatus 4.

### [Reference Signs List]

- 1:: refrigeration cycle
- 2:: compressor
- 3:: condenser
- 4:: expansion apparatus
- 5:: evaporator
- 6:: flow passage (first flow passage) for cooling medium
- 7:: flow passage (second flow passage) for cooling medium
- 9:: cooling medium circuit
- 10:: internal heat exchanger
- 11:: first heat exchanging unit
- 11a:: inlet portion of first heat exchanging unit
- 11b :: outlet portion of first heat exchanging unit
- 12:: second heat exchanging unit
- 12a:: inlet portion of second heat exchanging unit
- 12b:: outlet portion of second heat exchanging unit
- 21:: main body
- 21a:: first side surface
- 21b:: second side surface
- 21c:: third side surface
- 21d:: fourth side surface
- 21e:: top surface
- 21f:: bottom surface
- 22:: pseudo-element part
- 23:: entry of first flow passage
- 24:: exit of first flow passage
- 25:: entry of second flow passage
- 26:: exit of second flow passage
- 27:: upper housing
- 28:: lower housing
- 20:: connector
- 30:: seal component
- 31:: peripheral wall part
- 32:: accommodation space
- 33:: close contact part
- 34:: foam material
- 40:: main body
- 40a:: first side surface
- 40b:: second side surface
- 40c:: third side surface
- 40d:: fourth side surface
- 40e:: top surface
- 40f:: bottom surface
- 41:: first inflow port
- 42:: first outflow port
- 43:: second inflow port
- 44:: second outflow port
- 45:: valve seat
- 46:: valve element
- 47:: valve element receiving portion
- 48:: coil spring
- 50:: element part
- 51:: upper housing
- 52:: lower housing
- 53:: diaphragm
- 54:: temperature sensitive chamber
- 55:: temperature sensitive bar
- 56:: operation bar
- 61 to 68:: pipe
- 62a, 66a:: flange
- 71:: joint member
- 72:: joint member
- 91:: through hole
- 100:: HVAC unit
- 101:: HVAC case
- 123:: first connection part
- 124:: second connection part
- 125:: third connection part
- 126:: fourth connection part
- 141, 142, 143, 144:: connection part
- R:: vehicle cabin
- E:: engine room
- D:: dash panel

## Claims

1. A refrigeration cycle (1) comprising:
a cooling medium circuit (9) including a compressor (2), a condenser (3), an expansion apparatus (4), and an evaporator (5) connected via a pipe, the cooling medium circuit circulating a cooling medium, the cooling medium circuit being suitable to be mounted in a vehicle;
an internal heat exchanger (10) including a first heat exchanging unit (11) through which the cooling medium introduced from the condenser to the expansion apparatus flows and a second heat exchanging unit (12) through which the cooling medium introduced from the evaporator to a suction side of the compressor flows, the internal heat exchanger performing a heat exchange of the cooling medium between the first heat exchanging unit and the second heat exchanging unit, the internal heat exchanger being disposed in a vehicle cabin when mounted to a vehicle. a connector (20) through which a flow passage for the cooling medium between the condenser and the first heat exchanging unit and a flow passage for the cooling medium between the second heat exchanging unit and the compressor; and
a seal component (30) for blocking a through hole (91) provided in a dash panel (D) partitioning an engine room (E) from a vehicle cabin (R),
**characterized in that**
the seal component (30) has a peripheral wall part (31) extending in a direction in which the through hole extends,
wherein all or part of the connector (20) is accommodated in an accommodation space (32) partitioned by the peripheral wall part, and
wherein all or part of the expansion apparatus (4) has an outer shape accommodatable in the accommodation space,
wherein the peripheral wall part of the seal component has a close contact part (33) in close contact with the connector (20) in a liquid-tight manner, and
wherein the expansion apparatus (4) has an outer shape capable of making close contact with the close contact part (33) in a liquid-tight manner.

2. The refrigeration cycle according to claim 1, wherein the connector includes a first connection part (123) to which the pipe through which the cooling medium flowing from the condenser flows is connected,
a second connection part (124) to which an inlet portion of the first heat exchanging unit is connected,
a third connection part (125) to which an outlet portion of the second heat exchanging unit is connected, and
a fourth connection part (126) to which the pipe through which the cooling medium sucked by the compressor flows is connected.

3. The refrigeration cycle according to claim 1 or 2, wherein the expansion apparatus is a block type expansion apparatus.

4. The refrigeration cycle according to any one of claims 1 to 3,
wherein the internal heat exchanger has a laminated structure in which a plurality of the first heat exchanging units and a plurality of the second heat exchanging units are laminated alternately.

5. The refrigeration cycle according to any one of claims 1 to 4,
wherein the connector has the first connection part (123) to which the pipe through which the cooling medium flowing from the condenser flows is connected and the fourth connection part (126) to which the pipe through which the cooling medium sucked by the compressor flows is connected, and
wherein the expansion apparatus includes connection parts (141 and 144) having the same shapes and the same dispositions as the first connection part and the fourth connection part.

6. The refrigeration cycle according to any one of claims 1 to 5,
wherein the connector has the second connection part (124) to which an inlet portion of the first heat exchanging unit is connected and the third connection part (125) to which an outlet portion of the second heat exchanging unit is connected, and
wherein the expansion apparatus includes connection parts (142 and 143) having the same shapes and the same dispositions as the second connection part and the third connection part.

7. The refrigeration cycle according to any one of claim 1 and claims 3 to 5,
wherein the connector has a fifth connection part (124) to which the pipe through which the cooling medium flowing into the first heat exchanging unit flows is connected and a sixth connection part (125) to which the pipe through which the cooling medium flowing from the second heat exchanging unit flows is connected, and
wherein the expansion apparatus includes connection parts (142 and 143) having the same shapes and the same dispositions as the fifth connection part and the sixth connection part.

## Patentansprüche

1. Kältekreislauf (1), umfassend:
einen Kühlmediumkreis (9), der einen Kompressor (2), einen Kondensierer (3), eine Expansionsvorrichtung (4) und einen Verdampfer (5) einschließt, die über ein Rohr verbunden sind, wobei der Kühlmediumkreis ein Kühlmedium zirkuliert, wobei der Kühlmediumkreis geeignet ist, um in einem Fahrzeug montiert zu werden;
einen internen Wärmetauscher (10), der eine erste Wärmetauschereinheit (11), durch die das aus dem Kondensierer eingebrachte Kühlmedium zu der Expansionsvorrichtung fließt, und eine zweite Wärmetauschereinheit (12) einschließt, durch die das aus dem Verdampfer eingebrachte Kühlmedium zu einer Saugseite des Kompressors fließt, wobei der interne Wärmetauscher einen Wärmetausch des Kühlmediums zwischen der ersten Wärmetauschereinheit und der zweiten Wärmetauschereinheit durchführt, wobei der interne Wärmetauscher im Fahrgastraum eines Fahrzeugs angeordnet ist, wenn er an ein Fahrzeug montiert ist;
einen Verbinder (20), durch den ein Fließdurchgang für das Kühlmedium zwischen dem Kondensierer und der ersten Wärmetauschereinheit und ein Fließdurchgang für das Kühlmedium zwischen der zweiten Wärmetauschereinheit und dem Kompressor verläuft; und
eine Dichtungskomponente (30) zum Blockieren eines Durchgangsloches (91), das in einer Armaturentafel (D) bereitgestellt wird, welche einen Motorraum (E) von einem Fahrgastraum (R) des Fahrzeugs abteilt,
**dadurch gekennzeichnet, dass** die Dichtungskomponente (30) ein peripheres Wandteil (31) aufweist, das sich in eine Richtung erstreckt, in die sich das Durchgangsloch erstreckt, wobei der gesamte oder ein Teil des Verbinders (20) in einem Unterbringungsraum (32) untergebracht ist, der durch das periphere Wandteil abgeteilt wird, und
wobei die gesamte oder ein Teil der Expansionsvorrichtung (4) eine äußere Gestalt aufweist, die in dem Unterbringungsraum unterbringbar ist, wobei das periphere Wandteil der Dichtungskomponente ein enges Kontaktteil (33) in engem Kontakt mit dem Verbinder (20) in flüssigkeitsdichter Weise aufweist, und
wobei die Expansionsvorrichtung (4) eine äußere Gestalt aufweist, die in der Lage ist, engen Kontakt mit dem engen Kontaktteil (33) in flüssigkeitsdichter Weise herzustellen.

2. Kältekreislauf nach Anspruch 1, wobei der Verbinder ein erstes Verbindungsteil (123), mit dem das Rohr, durch das das Kühlmedium von dem Kondensierer fließt, verbunden ist,
ein zweites Verbindungsteil (124), mit dem ein Einlassabschnitt der ersten Wärmetauschereinheit verbunden ist,
ein drittes Verbindungsteil (125), mit dem ein Auslassabschnitt der zweiten Wärmetauschereinheit verbunden ist, und
ein viertes Verbindungsteil (126) einschließt, mit dem das Rohr, durch das das durch den Kompressor angesaugte Kühlmedium fließt, verbunden ist.

3. Kältekreislauf nach Anspruch 1 oder 2,
wobei die Expansionsvorrichtung eine Expansionsvorrichtung vom Blocktyp ist.

4. Kältekreislauf nach einem der Ansprüche 1 bis 3, wobei der interne Wärmetauscher eine laminierte Struktur aufweist, in der eine Vielzahl der ersten Wärmetauschereinheiten und eine Vielzahl der zweiten Wärmetauschereinheiten alternierend laminiert sind.

5. Kältekreislauf nach einem der Ansprüche 1 bis 4, wobei der Verbinder das erste Verbindungsteil (123), mit dem das Rohr, durch das das von dem Kondensierer fließende Kühlmedium fließt, verbunden ist, und das vierte Verbindungsteil (126) aufweist, mit dem das Rohr, durch das das durch den Kompressor angesaugte Kühlmedium fließt, verbunden ist, und
wobei die Expansionsvorrichtung Verbindungsteile (141 und 144) mit denselben Gestalten und denselben Anordnungen wie das erste Verbindungsteil und das vierte Verbindungsteil einschließt.

6. Kältekreislauf nach einem der Ansprüche 1 bis 5, wobei der Verbinder das zweite Verbindungsteil (124), mit dem ein Einlassabschnitt der ersten Wärmetauschereinheit verbunden ist, und das dritte Verbindungsteil (125) aufweist, mit dem ein Auslassabschnitt der zweiten Wärmetauschereinheit verbunden ist, und
wobei die Expansionsvorrichtung Verbindungsteile (142 und 143) mit denselben Gestalten und denselben Anordnungen wie das zweite Verbindungsteil und das dritte Verbindungsteil einschließt.

7. Kältekreislauf nach einem von Anspruch 1 und den Ansprüchen 3 bis 5,
wobei der Verbinder ein fünftes Verbindungsteil (124), mit dem das Rohr, durch das das in die erste Wärmetauschereinheit fließende Kühlmedium fließt, verbunden ist, und ein sechstes Verbindungsteil (125) aufweist, mit dem das Rohr, durch das das aus der zweiten Wärmetauschereinheit fließende Kühlmedium fließt, verbunden ist, und
wobei die Expansionsvorrichtung Verbindungsteile (142 und 143) mit denselben Gestalten und denselben Anordnungen wie das fünfte Verbindungsteil und das sechste Verbindungsteil einschließt.

## Revendications

1. Cycle de réfrigération (1) comprenant :
un circuit d'agent de refroidissement (9) comprenant un compresseur (2), un condenseur (3), un appareil d'expansion (4) et un évaporateur (5) relié par l'intermédiaire d'un tuyau, le circuit d'agent de refroidissement faisant circuler un agent de refroidissement, le circuit d'agent de refroidissement pouvant être monté dans un véhicule ;
un échangeur de chaleur interne (10) comprenant une première unité d'échange de chaleur (11) à travers laquelle circule l'agent de refroidissement introduit du condenseur vers l'appareil d'expansion et une seconde unité d'échange de chaleur (12) à travers laquelle circule l'agent de refroidissement introduit de l'évaporateur vers un côté aspiration du compresseur, l'échangeur de chaleur interne effectuant un échange de chaleur de l'agent de refroidissement entre la première unité d'échange de chaleur et la seconde unité d'échange de chaleur, l'échangeur de chaleur interne étant disposé dans une cabine de véhicule lorsqu'il est monté sur un véhicule ;
un raccord (20) dans lequel se trouvent un passage d'écoulement pour l'agent de refroidissement entre le condenseur et la première unité d'échange de chaleur et un passage d'écoulement pour l'agent de refroidissement entre la seconde unité d'échange de chaleur et le compresseur ; et
un composant d'étanchéité (30) pour bloquer un trou traversant (91) pratiqué dans un panneau de tableau de bord (D) séparant un compartiment moteur (E) d'une cabine de véhicule (R),
**caractérisé en ce que** le composant d'étanchéité (30) a une partie de paroi périphérique (31) s'étendant dans une direction dans laquelle s'étend le trou traversant,
tout ou partie du raccord (20) étant logé dans un espace de logement (32) cloisonné par la partie de paroi périphérique, et
tout ou partie de l'appareil d'expansion (4) ayant une forme externe pouvant être logée dans l'espace de logement,
la partie de paroi périphérique du composant d'étanchéité ayant une partie de contact étroit (33) en contact étroit avec le raccord (20) de manière étanche aux liquides, et
l'appareil d'expansion (4) ayant une forme externe pouvant établir un contact étroit avec la partie de contact étroit (33) d'une manière étanche aux liquides.

2. Cycle de réfrigération selon la revendication 1,
le raccord comprenant une première partie de raccordement (123) à laquelle est raccordé le tuyau à travers lequel circule l'agent de refroidissement s'écoulant du condenseur,
une deuxième partie de raccordement (124) à laquelle est raccordée une partie d'entrée de la première unité d'échange de chaleur,
une troisième partie de raccordement (125) à laquelle est raccordée une partie de sortie de la seconde unité d'échange de chaleur, et
une quatrième partie de raccordement (126) à laquelle est raccordé le tuyau à travers lequel circule l'agent de refroidissement aspiré par le compresseur.

3. Cycle de réfrigération selon la revendication 1 ou 2,
l'appareil d'expansion étant un appareil d'expansion de type bloc.

4. Cycle de réfrigération selon l'une quelconque des revendications 1 à 3,
l'échangeur de chaleur interne ayant une structure stratifiée dans laquelle une pluralité des premières unités d'échange de chaleur et une pluralité des secondes unités d'échange de chaleur sont stratifiées alternativement.

5. Cycle de réfrigération selon l'une quelconque des revendications 1 à 4,
le raccord ayant la première partie de raccordement (123) à laquelle est raccordé le tuyau à travers lequel circule l'agent de refroidissement s'écoulant du condenseur et la quatrième partie de raccordement (126) à laquelle est raccordé le tuyau à travers lequel circule l'agent de refroidissement aspiré par le compresseur, et
l'appareil d'expansion comprenant des parties de raccordement (141 et 144) ayant les mêmes formes et les mêmes dispositions que la première partie de raccordement et la quatrième partie de raccordement.

6. Cycle de réfrigération selon l'une quelconque des revendications 1 à 5,
le raccord ayant la deuxième partie de raccordement (124) à laquelle est raccordée une partie d'entrée de la première unité d'échange de chaleur et la troisième partie de raccordement (125) à laquelle est raccordée une partie de sortie de la seconde unité d'échange de chaleur, et
l'appareil d'expansion comprenant des parties de raccordement (142 et 143) ayant les mêmes formes et les mêmes dispositions que la deuxième partie de raccordement et la troisième partie de raccordement.

7. Cycle de réfrigération selon l'une quelconque des revendications 1 et 3 à 5,
le raccord ayant une cinquième partie de raccordement (124) à laquelle est raccordé le tuyau à travers lequel circule l'agent de refroidissement s'écoulant dans la première unité d'échange de chaleur et une sixième partie de raccordement (125) à laquelle est raccordé le tuyau à travers lequel circule l'agent de refroidissement s'écoulant de la seconde unité d'échange de chaleur, et
l'appareil d'expansion comprenant des parties de raccordement (142 et 143) ayant les mêmes formes et les mêmes dispositions que la cinquième partie de raccordement et la sixième partie de raccordement.
